# EUROPÄISCHE PATENTSCHRIFT

(11) **EP 3 791 092 B1**
(45) Veröffentlichungstag und Bekanntmachung des Hinweises auf die Patenterteilung: **26.10.2022**
(21) Anmeldenummer: 19718285.0
(22) Anmeldetag: 10.04.2019
(51) Int. Cl.: F16H 59/14, F16H 59/44, F16H 61/00, F16H 61/04

(54) **DREHMOMENTERMITTLUNG BEI NEBENVERBRAUCHERN ZUR VERBESSERUNG DER SCHALTQUALITÄT**
TORQUE DETERMINATION IN AUXILIARY CONSUMERS
DÉTERMINATION DU COUPLE DANS CONSOMMATEURS SECONDAIRES

(30) Priorität: 08.05.2018 DE 102018207097
(43) Veröffentlichungstag der Anmeldung: 17.03.2021
(73) Patentinhaber: ZF Friedrichshafen AG, 88046 Friedrichshafen (DE)
(72) Erfinder: STRAK, Dieter, 88090 Immenstaad am Bodensee (DE); WAIBEL, Anton, 88048 Friedrichshafen (DE)
(74) Vertreter: ZF Friedrichshafen AG
(86) Internationale Anmeldenummer: PCT/EP2019/059017
(87) Internationale Veröffentlichungsnummer: WO 2019/214890

(56) Entgegenhaltungen:
- EP-A1- 0 683 336
- US-A- 5 319 555
- US-B1- 6 379 283

## Beschreibung

Die Erfindung betrifft eine Anordnung nach dem Oberbegriff von Anspruch 1, ein Verfahren nach Anspruch 3 und ein Verfahren nach Anspruch 4.

Im Nutzfahrzeugbereich werden Grundgerüste für Fahrzeuge, bestehend aus Motor, Kabine, Antriebsstrang und einer Plattform, an spezialisierte Fahrzeugbauer, sogenannte Bodybuilder, verkauft. Die Bodybuilder versehen das Fahrzeuggrundgerüst mit einem eigenen Aufbau. Daraus kann etwa ein Abschleppfahrzeug oder ein Wohnmobil entstehen.

Der Hersteller des Fahrzeuggrundgerüsts weiß nicht, was der Bodybuilder im Fahrzeug verbauen wird. Insbesondere Nebenaggregate, wie Generator, Pumpe oder Klimakompressor, die vom Verbrennungsmotor des Fahrzeugs angetrieben werden, bereiten Probleme, wenn sie vom Bodybuilder nachgerüstet werden.

Wird ein Nebenverbraucher zugeschaltet, greift dieser Drehmoment des Motors ab. Entsprechend verringert sich das am Getriebe des Fahrzeugs anliegende Drehmoment. Wird dies vom Getriebesteuergerät nicht angemessen berücksichtigt, werden die Kupplungen mit falschen Drücken beaufschlagt. Dies führt durch harte Schaltvorgänge zu Komforteinbußen, verursacht erhöhten Verschleiß und kann sogar Getriebeschäden hervorrufen.

Stehen dem Getriebesteuergerät Informationen über das von den Nebenverbrauchern abgegriffene Drehmoment zur Verfügung, kann es die Kupplungsdrücke entsprechend anpassen. Für Nebenverbraucher, die von einem Bodybuilder nachgerüstet werden, sind Informationen über das abgegriffene Drehmoment aber meist nicht verfügbar.

Aus der EP 0 683 336 A1, welche die Basis für die zweiteilige Form bildet, ist ein Verfahren zum Steuern eines automatischen mechanischen Kraftfahrzeuggetriebesystems, mit einem durch ein Fahrpedal gesteuerten Verbrennungsmotor, mit einem vom Fahrer eingestellten Fahrpedal, mit einem vielgängigen mechanischen Gangwechselgetriebe, dessen Eingangswelle über eine Reibungshauptkupplung mit dem Motor in Antriebsverbindung steht, und mit einer Steuereinheit bekannt. Die Steuereinheit empfängt die Eingangssignale einschliesslich eines die Drehzahl der Eingangswelle oder des Motors kennzeichnenden Eingangssignals, eines das Motorgesamtdrehmoment kennzeichnenden Eingangssignals und eines das Motorgrundreibmoment kennzeichnenden Signals und verarbeitet diese Signale gemäß vorbestimmter logischer Regeln, um Steuerparameter zu bestimmen und Befehlsausgangssignale an die Getriebesystemaktuatoren auszugeben, zu denen Mittel zur Steuerung der Kraftstofflieferung zu dem Motor sowie Mittel zum Steuern des Schaltens des Getriebes gehören. Hierbei ist vorgesehen, dass bei Zuständen des Fahrzeugs, bei denen der Motor im Leerlauf läuft und das Getriebe im Leerlauf befindlich und/oder die Hauptkupplung ausgerückt ist, ein Wert eines Steuerparameters bestimmt wird, der die Motorverlangsamung kennzeichnet, dass eine Beziehung zwischen der Motorverlangsamung und einem Zubehördrehmoment bestimmt wird, dass ein Steuerparameter bestimmt wird, der das Zubehördrehmoment kennzeichnet, und dass ein Wert des die Motorverlangsamung kennzeichnenden Steuerparameters als eine Funktion des Werts des Parameters bestimmt wird, der das Zubehördrehmoment und die Beziehung kennzeichnet.

Aus der US 6 379 283 B1 ist ein Verfahren zum Einsatz an einem Verbrennungsmotor in einem mit einer Vorrichtung mit einer Eingangsdrehzahl bzw. -geschwindigkeit und einer Ausgangsdrehzahl bzw. -geschwindigkeit koppelten Antriebsstrang bekannt, welches umfasst: Anzeige, dass das Antriebsstrang-Ausgangsdrehmoment unter einem auf der Eingangsdrehzahl und Ausgangsdrehzahl der Vorrichtung vorherbestimmten Wert liegt; und Bildung eines Berichtigungswertes für das Antriebsstrang-Drehmoment in Antwort auf ein Motordrehmoment, wobei die Anzeige erfolgt, wenn die Getriebeausgangsdrehzahl die Getriebeeingangsdrehzahl bzw. -geschwindigkeit überschreitet. Das verfügbare Drehmoment wird berechnet indem die von den Nebenverbrauchern benötigten Drehmomente vom Motordrehmoment abgezogen werden.

Aus der US 5 319 555 A ist ein System zum Steuern des Übersetzungsverhältnisses eines mehrstufigen oder stufenlos veränderbaren automatischen Getriebes eines Fahrzeugs durch eine Fuzzy- Folgerung auf Basis vorbestimmter Parameter bekannt, welche Betriebszustände des Fahrzeugs einschließlich des durch Fahrwiderstandsberechnungsmittel berechneten Fahrwiderstands bezeichnen, wobei die Fahrwiderstandsberechnungsmittel umfassen: erste Mittel zum Ermitteln des vom Fahrzeugmotor erzeugten Ausgangsdrehmoments zumindest aus einer Motorgeschwindigkeitund einer Motorlast nach Maßgabe vorbestimmter Charakteristiken, zweite Mittel zum Berechnen der Antriebskraft, die das Fahrzeug erzeugt, durch Multiplizieren des ermittelten Drehmoments mit dem Gesamtübersetzungsverhältnis und dem Getriebewirkungsgrad und durch Dividieren des Produkts durch den Fahrzeugreifenradius und dritte Mittel zum Ermitteln der Fahrzeugbeschleunigung und zum Multiplizieren der ermittelten Fahrzeugbeschleunigung mit der Fahrzeugmasse, um die zur Beschleunigung benötigte Kraft zu ermitteln, und zum Ermitteln des Fahrwiderstands durch Subtrahieren der ermittelten Kraft von der Antriebskraft. Hierbei ist vorgesehen, dass die zweiten Mittel das ermittelte Drehmoment anpassen, indem sie den Drehmomentverbrauch einer vom Fahrzeugmotor angetriebenen Einrichtung subtrahieren, wobei der Drehmomentverbrauch der angetriebenen Einrichtung mit Bezug auf die Motorgeschwindigkeit definiert ist, und dass sie das ermittelte Drehmoment hinsichtlich einer Kraftübertragungsverzögerung erster Ordnung anpassen.

Der Erfindung liegt die Aufgabe zugrunde, die Schaltqualität bei Fahrzeugen, die von Bodybuildern auf Basis eines Grundgerüsts erstellt werden, zu verbessern.

Diese Aufgabe wird gelöst durch eine Anordnung nach Anspruch 1, ein Verfahren nach Anspruch 3 und ein Verfahren nach Anspruch 4. Bevorzugte Weiterbildungen sind in den Unteransprüchen enthalten.

Die Anordnung umfasst einen Motor, ein Getriebe, ein Getriebesteuergerät und einen Nebenverbraucher. Die Anordnung ist zur Verwendung in einem Kraftfahrzeug, insbesondere einem Nutzkraftfahrzeug bestimmt. Der Motor dient dem Antrieb des Fahrzeugs. Insbesondere kann es sich um einen Verbrennungsmotor handeln. Das Getriebe ist in einem Drehmomentfluss von einer Ausgangswelle des Motors zu den angetriebenen Rädern des Fahrzeugs angeordnet. Es überträgt und wandelt also ein Ausgangsdrehmoment des Motors, mit dem das Fahrzeug angetrieben wird. Bevorzugt handelt es sich um ein automatisches Getriebe, das von dem Getriebesteuergerät gesteuert wird. Insbesondere gibt das Getriebesteuergerät die jeweils eingelegte Gangstufe des Getriebes vor und steuert dessen Schaltelemente an.

Bei dem Nebenverbraucher kann es sich etwa um einen Generator, eine Pumpe oder einen Klimakompressor handeln. Der Nebenverbraucher wird von dem Motor angetrieben. Dazu ist der Motor drehwirksam mit einem Eingang bzw. einer Eingangswelle des Nebenverbrauchers verbunden. Es besteht also eine drehwirksame Verbindung zwischen einer drehenden, angetriebenen Komponente des Motors und dem Eingang des Nebenverbrauchers. Insbesondere kann der Eingang des Nebenverbrauchers drehwirksam mit einer Ausgangswelle bzw. der Kurbelwelle des Motors verbunden sein.

Eine drehwirksame Verbindung zwischen einer ersten drehbaren Komponente und einer zweiten drehbaren Komponente besteht, wenn eine Drehzahl der ersten drehbaren Komponente und eine Drehzahl der zweiten drehbaren Komponente voneinander abhängig sind. Der Drehzahlzusammenhang ist eineindeutig bzw. umkehrbar eindeutig. Die Drehzahl der zweiten drehbaren Komponente hängt also eindeutig von der Drehzahl der ersten drehbaren Komponente ab. Umgekehrt hängt die Drehzahl der ersten drehbaren Komponente eindeutig von der Drehzahl der zweiten drehbaren Komponente ab. Insbesondere kann zwischen der Drehzahl der ersten drehbaren Komponente und der Drehzahl der zweiten drehbaren Komponente ein linearer Zusammenhang bestehen. Dies bedeutet, dass die erste drehbare Komponente und die zweite drehbare Komponente mit einer Über- bzw. Untersetzung oder drehfest gekoppelt sind.

Bevorzugt ist der Eingang des Nebenverbrauchers über ein Riemengetriebe mit dem Motor gekoppelt. Das Riemengetriebe stellt also die drehwirksame Verbindung zwischen dem Motor und dem Eingang des Nebenverbrauchers her.

Der Motor ist darüber hinaus drehwirksam mit einem Eingang bzw. einer Eingangswelle des Getriebes verbunden. Insbesondere kann eine Ausgangswelle oder Kurbelwelle des Motors drehfest mit dem Eingang des Getriebes verbunden sein.

Bei einer drehfesten Verbindung sind keinerlei Verdrehungen der verbundenen Komponenten relativ zueinander möglich.

Ist der Nebenverbraucher aktiv, wird ein Teil der Ausgangsleistung des Motors abgezweigt und dem Nebenverbraucher zugeführt. Die am Eingang des Getriebes anliegende Leistung ist um den für den Nebenverbraucher abgezweigten Teil vermindert. Dies muss das Getriebesteuergerät berücksichtigen, um das Getriebe geeignet zu steuern. Insbesondere müssen die Kupplungsdrücke an die durch den Nebenverbraucher verminderte Leistung angepasst werden. Dazu ist das Getriebesteuergerät erfindungsgemäß ausgebildet, ein an dem Eingang des Getriebes anliegendes Drehmoment unter Verwendung einer Funktion zu ermitteln.

Die Ermittlung des am Eingang des Getriebes anliegenden Drehmoments erfolgt auf Basis eines Ausgangsdrehmoments, das heißt eines an der Ausgangs- bzw. Kurbelwelle des Motors anliegenden Drehmoments. Die Funktion dient dazu, einen Wert zu bestimmen, um den das Ausgangsdrehmoment des Motors durch den aktiven Nebenverbraucher vermindert wird. Bevorzugt wird dem Getriebesteuergerät dazu das Ausgangsdrehmoment des Motors von einem Motorsteuergerät übermittelt. Zur Übermittlung eines entsprechenden Drehmomentsignals dient eine Datenübertragungsvorrichtung, das heißt ein Fahrzeugbus.

Die zur Ermittlung des an dem Eingang des Getriebes anliegenden Drehmoments verwendete Funktion ist parametrisierbar. Dies bedeutet, dass die Funktion ein Funktionsargument in Abhängigkeit eines oder mehrerer Parameter auf einen Funktionswert abbildet. Die Abbildung durch die Funktion ändert sich also in Abhängigkeit der Parameter.

Bei den Parametern kann es sich etwa um Stützstellen der Funktion handeln. Die zwischen den Stützstellen liegenden Funktionswerte werden dann durch Interpolation berechnet.

Bei dem Funktionsargument handelt es sich vorliegend um eine Drehzahl des Motors. Diese wird auf das an dem Eingang des Nebenverbrauchers anliegende Drehmoment abgebildet. Das an dem Eingang des Nebenverbrauchers anliegende Drehmoment ist also der Funktionswert. Um die Funktion anwenden und den Funktionswert ermitteln zu können, ist das Getriebesteuergerät bevorzugt ausgebildet, ein Drehzahlsignal zu empfangen, das von dem Motorsteuergerät bereitgestellt und über die Datenübertragungsvorrichtung versendet wird.

Das Getriebesteuergerät ermittelt das von dem Nebenverbraucher abgegriffene Drehmoment. Dieses ist identisch mit dem Drehmoment, das an dem Eingang des Nebenverbrauchers anliegt und sich als Funktionswert der parametrisierbaren Funktion ergibt.

Auf Basis des abgegriffenen Drehmoments kann das Getriebesteuergerät aus dem von dem Motor bereitgestellten Ausgangsdrehmoment das an dem Eingang des Getriebes anliegende Drehmoment berechnen.

Die parametrisierbare Funktion unterstützt den Einbau von Nebenverbrauchern durch einen Bodybuilder. Entsprechend der verbauten Nebenverbraucher kann der Bodybuilder die Funktion parametrisieren und so dem Getriebesteuergerät eine Ermittlung des von den Nebenverbrauchern abgegriffenen Drehmoments ermöglichen. Die Festlegung der Parameter ist nachträglich möglich, das heißt nachdem das Fahrzeug mit der erfindungsgemäßen Anordnung fertiggestellt und an den Bodybuilder ausgeliefert wurde. Dem Hersteller des Fahrzeugs müssen dabei die von dem Bodybuilder hinzugefügten Nebenverbraucher nicht bekannt sein.

In einer bevorzugten Weiterbildung umfasst die Anordnung ein weiteres Steuergerät. Bei diesem handelt es sich etwa um ein Motorsteuergerät oder ein Steuergerät des Nebenverbrauchers. Das weitere Steuergerät sendet Informationen über den Aktivierungszustand des Nebenverbrauchers.

Die Informationen sind bevorzugt in einem ersten Signal und einem zweiten Signal enthalten. Bei Aktivierung des Nebenverbrauchers sendet das Steuergerät das erste Signal. Entsprechend sendet das Steuergerät das zweite Signal, wenn der Nebenverbraucher deaktiviert wird.

Das Getriebesteuergerät ist ausgebildet, die Informationen zu empfangen und das am Eingang des Getriebes anliegende Drehmoment unter Verwendung der parametrisierbaren Funktion zu ermitteln, wenn der Nebenverbraucher aktiviert ist. Insbesondere geschieht dies genau dann, wenn der Nebenverbraucher aktiviert ist. Wenn also der Nebenverbraucher nicht aktiviert ist, ermittelt das Getriebesteuergerät das am Eingang des Getriebes anliegende Drehmoment ohne Verwendung der Funktion. In diesem Fall entspricht das an dem Eingang des Getriebes anliegende Drehmoment einem von dem Motor bereitgestellten Drehmoment, das nicht um das von dem Nebenverbraucher abgegriffene Drehmoment vermindert wurde.

Eine derartige Ermittlung des an dem Eingang des Getriebes anliegenden Drehmoments erfolgt, nachdem das Getriebesteuergerät das zweite Signal empfangen hat. Wenn der Nebenverbraucher aktiviert wird und das Getriebesteuergerät entsprechend das erste Signal empfängt, ermittelt das Getriebesteuergerät unter Verwendung der parametrisierbaren Funktion in Abhängigkeit einer momentanen Drehzahl des Motors das von dem Nebenverbraucher abgegriffene Drehmoment und vermindert das von dem Motor bereitgestellte Drehmoment entsprechend.

Erfindungsgemäß sieht die Anordnung gleichfalls ein weiteres Steuergerät vor. Dieses kann mit dem oben genannten weiteren Steuergerät identisch sein, oder es handelt sich um ein separates Steuergerät. Insbesondere kann es sich um ein Motorsteuergerät handeln. Die Weiterbildung dient bei einem in den Fahrzeugbus integrierten Nebenverbraucher als Rückfallebene. Ein solcher Nebenverbraucher wird typischerweise nicht von dem Bodybuilder, sondern von dem Fahrzeughersteller verbaut. In diesem Fall ist es möglich, das von dem Nebenverbraucher abgegriffene Drehmoment über den Fahrzeugbus zu übermitteln.

Der Übermittlung des von dem Nebenverbraucher abgegriffenen Drehmoments dient erfindungsgemäß das weitere Steuergerät. Das Drehmoment wird dem Getriebesteuergerät periodisch übermittelt, das heißt in zeitlich fortlaufender Reihenfolge. Die Übermittlung erfolgt bevorzugt, indem ein Signal über die Datenverarbeitungsvorrichtung übermittelt wird, in welchem Informationen über das Drehmoment codiert sind. Im Normalfall verwendet das Getriebesteuergerät diese Informationen, um das an dem Eingang des Getriebes anliegende Drehmoment zu ermitteln. Bleibt die Übermittlung aus, verwendet das Getriebesteuergerät als Rückfallebene die parametrisierbare Funktion. Die Funktion wird also genau dann verwendet, wenn die Übermittlung des von dem Nebenverbraucher abgegriffenen Drehmoments ausbleibt.

Ein Verfahren zur Herstellung eines Kraftfahrzeugs mit der oben beschriebenen Anordnung sieht erfindungsgemäß vor, dass die parametrisierbare Funktion parametrisiert wird. Dies geschieht durch Eingabe der Parameter. Unterbleibt die Eingabe der Parameter, wird als parametrisierbare Funktion eine vorgegebene Standardfunktion verwendet.

Das erfindungsgemäße Verfahren erlaubt es einem Bodybuilder, dem Getriebesteuergerät Informationen über das von nachträglich verbauten Nebenverbrauchern abgegriffene Drehmoment bereitzustellen. Durch die Eingabe der Parameter entfällt die Notwendigkeit aufwendiger Softwareanpassungen oder Eingriffe in den Fahrzeugbus.

Ein weiteres erfindungsgemäßes Verfahren umfasst die oben beschriebenen, von dem Getriebesteuergerät ausgeführten Verfahrensschritte.

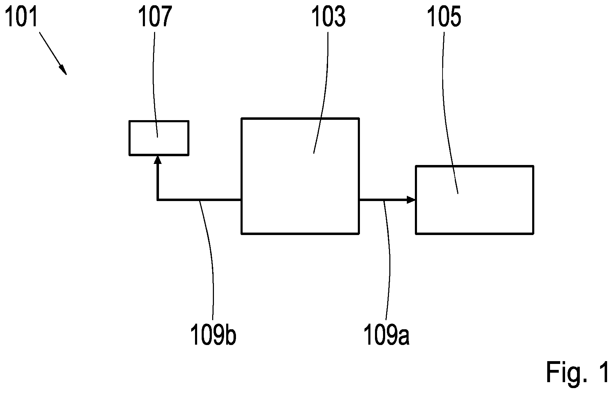

Ein bevorzugtes Ausführungsbeispiel der Erfindung ist in Fig. 1 dargestellt. Im Einzelnen zeigt:
Fig. 1 einen Antriebsstrang.

Der in Fig. 1 dargestellte Antriebsstrang 101 umfasst einen Motor 103, ein Getriebe 105 und einen Nebenverbraucher 107. Der Motor 103 treibt sowohl das Getriebe 105 als auch den Nebenverbraucher 107 an. Entsprechend verzweigt sich die Ausgangsleistung des Motors 103.

Ein von dem Motor 103 bereitgestelltes Ausgangsdrehmoment teilt sich in ein erstes Drehmoment 109a und ein zweites Drehmoment 109b. Das erste Drehmoment 109a liegt an einer Eingangswelle des Getriebes 105 an. Entsprechend liegt das zweite Drehmoment 109b an einer Eingangswelle des Nebenverbrauchers 107 an. Das Ausgangsdrehmoment des Motors ergibt sich als Summe des ersten Drehmoments 109a und des zweiten Drehmoments 109b.

Um das erste Drehmoment 109a aus dem von dem Motor 103 bereitgestellten Ausgangsdrehmoment zu ermitteln, muss das zweite Drehmoment 109b bekannt sein. Das zweite Drehmoment 109b wird daher mittels einer Funktion ermittelt, welche die Drehzahl des Motors 103 und das zweite Drehmoment 109b aufeinander abbildet.

## Patentansprüche

1. Anordnung mit einem Motor (103), einem Getriebe (105), einem Getriebesteuergerät, und einem Nebenverbraucher (107); wobei
der Motor (103) drehwirksam mit dem Getriebe (105) und dem Nebenverbraucher (107) verbunden ist; wobei
das Getriebesteuergerät ausgebildet ist, ein an dem Getriebe (105) anliegendes Drehmoment unter Verwendung einer parametrisierbaren Funktion zu ermitteln; wobei
die Funktion Drehzahlen des Motors (103) auf ein bei der jeweiligen Drehzahl an dem Nebenverbraucher anliegendes Drehmoment abbildet,
**dadurch gekennzeichnet, dass** die Anordnung ein weiteres Steuergerät aufweist; wobei das weitere Steuergerät ausgebildet ist, das an dem Nebenverbraucher (107) anliegende Drehmoment zu ermitteln und periodisch dem Getriebesteuergerät zu übermitteln; wobei das Getriebesteuergerät ausgebildet ist, das an dem Getriebe (105) anliegende Drehmoment unter Verwendung der Funktion zu ermitteln, wenn die Übermittlung des an dem Nebenverbraucher anliegenden Drehmoments ausbleibt.

2. Anordnung nach Anspruch 1,wobei
das weitere Steuergerät Informationen über den Aktivierungszustand des Nebenverbrauchers (107) sendet; wobei
das Getriebesteuergerät ausgebildet ist, die Informationen zu empfangen und das an dem Getriebe (105) anliegende Drehmoment unter Verwendung der Funktion zu ermitteln, wenn der Nebenverbraucher (107) aktiviert ist.

3. Verfahren zur Herstellung eines Kraftfahrzeugs mit einer Anordnung nach einem der vorhergehenden Ansprüche; **dadurch gekennzeichnet, dass** die Funktion parametrisiert wird.

4. Verfahren zur Ermittlung eines an einem Getriebe (105) eines Kraftfahrzeugs anliegenden Drehmoments; wobei
bei dem Kraftfahrzeug Ersatzseite 9 ein Motor (103) drehwirksam mit einem Nebenverbraucher (107) und dem Getriebe (105) verbunden ist; wobei
ein an dem Getriebe (105) anliegendes Drehmoment unter Verwendung einer parametrisierbaren Funktion ermittelt wird; wobei
die Funktion Drehzahlen des Motors (103) auf ein am bei der jeweiligen Drehzahl an dem Nebenverbraucher (107) anliegendes Drehmoment abbildet, **dadurch gekennzeichnet, dass** das an dem Nebenverbraucher (107) anliegende Drehmoment ermittelt und periodisch dem Getriebesteuergerät übermittelt wird; wobei das an dem Getriebe (105) anliegende Drehmoment unter Verwendung der Funktion ermittelt wird, wenn die Übermittlung des an dem Nebenverbraucher anliegenden Drehmoments ausbleibt.

## Claims

1. Arrangement having an engine (103), a gearbox (105), a gearbox control unit and an auxiliary consumer (107); wherein
the engine (103) is rotationally connected to the gearbox (105) and the auxiliary consumer (107); wherein
the gearbox control unit is designed to determine a torque applied to the gearbox (105) using a parameterizable function; wherein
the function maps rotational speeds of the engine (103) to a torque applied to the auxiliary consumer at the respective rotational speed,
**characterized in that** the arrangement has a further control unit; wherein the further control unit is designed to determine the torque applied to the auxiliary consumer (107) and to transmit this periodically to the gearbox control unit; wherein the gearbox control unit is designed to determine the torque applied to the gearbox (105) using the function when the transmission of the torque applied to the auxiliary consumer does not occur.

2. Arrangement according to Claim 1, wherein
the further control unit sends information relating to the activation status of the auxiliary consumer (107);
wherein
the gearbox control unit is designed to receive the information and to determine the torque applied to the gearbox (105) using the function when the auxiliary consumer (107) is activated.

3. Method for manufacturing a motor vehicle having an arrangement according to one of the preceding claims, **characterized in that**
the function is parameterized.

4. Method for determining a torque applied to a gearbox (105) of a motor vehicle; wherein in the motor vehicle an engine (103) is rotationally connected to an auxiliary consumer (107) and the gearbox (105); wherein
a torque applied to the gearbox (105) is determined using a parameterizable function; wherein
the function maps rotational speeds of the engine (103) to a torque applied to the auxiliary consumer (107) at the respective rotational speed, **characterized in that** the torque applied to the auxiliary consumer (107) is determined and this is transmitted periodically to the gearbox control unit; wherein the torque applied to the gearbox (105) is determined using the function when the transmission of the torque applied to the auxiliary consumer does not occur.

## Revendications

1. Agencement comprenant un moteur (103), une boîte de vitesses (105), un appareil de commande de la boîte de vitesses et un consommateur secondaire (107) ;
le moteur (103) étant relié de manière active en rotation à la boîte de vitesses (105) et au consommateur secondaire (107) ;
l'appareil de commande de la boîte de vitesses étant configuré pour déterminer un couple appliqué à la boîte de vitesses (105) en utilisant une fonction paramétrable ;
la fonction mettant en correspondance des vitesses de rotation du moteur (103) avec un couple appliqué au consommateur secondaire à la vitesse de rotation respective,
**caractérisé en ce que** l'agencement présente un autre appareil de commande ; l'autre appareil de commande étant configuré pour déterminer le couple appliqué au consommateur secondaire (107) et pour le transmettre périodiquement à l'appareil de commande de la boîte de vitesses ; l'appareil de commande de la boîte de vitesses étant configuré pour déterminer le couple appliqué à la boîte de vitesses (105) en utilisant la fonction lorsque la transmission du couple appliqué au consommateur secondaire n'a pas lieu.

2. Agencement selon la revendication 1,
l'autre appareil de commande envoyant des informations sur l'état d'activation du consommateur secondaire (107) ;
l'appareil de commande de la boîte de vitesses étant configuré pour recevoir les informations et déterminer le couple appliqué à la boîte de vitesses (105) en utilisant la fonction lorsque le consommateur secondaire (107) est activé.

3. Procédé de fabrication d'un véhicule automobile comprenant un agencement selon l'une quelconque des revendications précédentes ; **caractérisé en ce que** la fonction est paramétrée.

4. Procédé de détermination d'un couple appliqué à une boîte de vitesses (105) d'un véhicule automobile ;
un moteur (103) étant relié de manière active en rotation à un consommateur secondaire (107) et à la boîte de vitesses (105) dans le véhicule automobile ;
un couple appliqué à la boîte de vitesses (105) étant déterminé en utilisant une fonction paramétrable ;
la fonction mettant en correspondance des vitesses de rotation du moteur (103) avec un couple appliqué au consommateur secondaire (107) à la vitesse de rotation respective, **caractérisé en ce que** le couple appliqué au consommateur secondaire (107) est déterminé et transmis périodiquement à l'appareil de commande de la boîte de vitesses ; le couple appliqué à la boîte de vitesses (105) étant déterminé en utilisant la fonction lorsque la transmission du couple appliqué au consommateur secondaire n'a pas lieu.
